# EUROPÄISCHE PATENTSCHRIFT

(11) **EP 3 020 660 B1**
(45) Veröffentlichungstag und Bekanntmachung des Hinweises auf die Patenterteilung: **23.10.2019**
(21) Anmeldenummer: 15187291.8
(22) Anmeldetag: 29.09.2015
(51) Int. Cl.: B65G 43/08

(54) **VORRICHTUNG UND VERFAHREN ZUR ERMITTLUNG EINES BELEGUNGSGRADS EINER TRANSPORTEINRICHTUNG**
DEVICE AND METHOD FOR DETERMINING A CONTENT LEVEL OF A TRANSPORT DEVICE
DISPOSITIF ET PROCEDE DE DETERMINATION D'UN DEGRE D'OCCUPATION D'UN DISPOSITIF DE TRANSPORT

(30) Priorität: 12.11.2014 DE 102014116516
(43) Veröffentlichungstag der Anmeldung: 18.05.2016
(73) Patentinhaber: Krones AG, 93073 Neutraubling (DE)
(72) Erfinder: Paul, Christian, 93073 Neutraubling (DE); Vierheilig, Johannes, 93073 Neutraubling (DE); Waetzold, Juergen, 93073 Neutraubling (DE); Keppler, Michael, 93073 Neutraubling (DE)
(74) Vertreter: Schuhbießer, Irmgard Gertrud

(56) Entgegenhaltungen:
- EP-A1- 0 174 168
- EP-A1- 0 190 090
- EP-A1- 0 782 959
- EP-A2- 0 245 806
- DE-A1- 2 631 436
- DE-A1- 4 129 907
- DE-A1- 19 530 626
- DE-A1-102010 019 884
- FR-A1- 2 213 481
- GB-A- 795 525
- US-A- 5 276 974
- US-A- 5 909 013
- US-B1- 6 407 818

## Beschreibung

Die vorliegende Erfindung bezieht sich auf eine Vorrichtung und ein Verfahren zur Ermittlung eines Belegungsgrads einer Transporteinrichtung, welche insbesondere Behälter in einer Behälterbehandlungsanlage transportiert.

Bei Transporteinrichtungen zum Transport von Behältern in einer Behälterbehandlungsanlage können mehrere Behälter nebeneinander in einer Transportrichtung transportiert werden. Je nach Geschwindigkeit von vorgeschalteten Einrichtungen, wie Etikettiereinrichtung, Fülleinrichtung, usw. ist die Transporteinrichtung vollständig oder auch nur zum Teil mit Behältern belegt. Es ist vorteilhaft, die Geschwindigkeit nachgeschalteter Einrichtungen, wie z. B. Reinigungseinrichtung, Verpackungseinrichtung usw. abhängig vom Belegungsgrad der Transporteinrichtung zu regeln. Damit kann eine automatische Steuerung und Regelung der Behälterbehandlungsanlage mit geringstmöglichem Einsatz von Bedienpersonal realisiert werden.

DE 195 30 626 A1 offenbart ein Verfahren und eine Vorrichtung zum Erfassen der Belegung eines Förderers für Gefäße, bei welchem nur eine Erfassungseinrichtung parallel zum Förderer bewegt wird, um das Stauende von Transportgut zu erfassen.

WO 2008/116546 A2 zeigt ein Verfahren zur Überwachung, Steuerung und Optimierung von Abfüllanlagen für Lebensmittel, insbesondere für Getränkeflaschen. Das Verfahren wird zur Anlagen- oder Maschinenüberwachung herangezogen. Hierbei wird ein optoelektronisches Erkennungssystem in Form mindestens einer elektronischen Kamera eingesetzt, um die notwendigen Steuerdaten zu gewinnen. Die optischen Erkennungssysteme können zur Überwachung des Belegungsgrades von Puffertischen zum Einsatz kommen.

Nachteilig an derartigen optischen Erkennungssystemen ist, dass die Kamerasysteme bei der Verarbeitung von nicht kooperativen Behälteroberflächen an ihre Grenzen stoßen. Dabei ist ein stabiles Erfassen des Belegungsgrades nicht gewährleistet.

Zur Lösung dieses Problems wäre es denkbar, die Kamerasysteme durch andere Sensoren zu ersetzen. Jedoch weisen die zur Verfügung stehenden Sensoren einen hohen Komplexitätsgrad auf. Dies äußert sich vor allem durch einen hohen individuellen Einstellaufwand für unterschiedliche Behältertypen mittels einer speziellen Software. Dies verteuert eine Vorrichtung zur Erfassung des Belegungsgrads der Transporteinrichtung. Zudem kommt es im Betrieb der Vorrichtung zur Erfassung des Belegungsgrads der Transporteinrichtung aufgrund der notwendigen Einstellarbeiten zu Stillstandszeiten der Behälterbehandlungsanlage, wenn mit der Transporteinrichtung ein neuer Behältertyp transportiert werden soll. Dieser Umstand erhöht die Betriebskosten der Transporteinrichtung und der Behälterbehandlungsanlage.

Daher ist es Aufgabe der vorliegenden Erfindung, eine Vorrichtung und ein Verfahren zur Ermittlung eines Belegungsgrads einer Transporteinrichtung bereitzustellen, mit welchen die zuvor genannten Probleme gelöst werden können. Insbesondere sollen eine Vorrichtung und ein Verfahren zur Ermittlung eines Belegungsgrads einer Transporteinrichtung bereitgestellt werden, mit welchen eine Ermittlung eines Belegungsgrads einer Transporteinrichtung einfach, flexibel und kostengünstig realisierbar ist.

Diese Aufgabe wird durch eine Vorrichtung zur Ermittlung eines Belegungsgrads einer Transporteinrichtung nach Patentanspruch 1 gelöst.

Die Vorrichtung umfasst nur einfache, prozessstabile Standardkomponenten. Daher ist kein Expertenwissen oder spezielle Software zum Einstellen der Vorrichtung erforderlich. Die Vorrichtung benötigt keine intelligenten Erfassungseinrichtungen, wie beispielsweise auf Lichtschnittverfahren basierende Sensoren oder Kamera- oder Lasertechnologie. Somit ist auch der für die Vorrichtung erforderliche Hardwareaufwand reduziert.

Daher bietet die zuvor genannte Vorrichtung eine sehr effiziente und kostengünstige Möglichkeit der Erfassung bzw. Ermittlung des Belegungsgrads. Hierbei entsteht nur ein sehr geringer Kalibrier- und Referenzieraufwand.

Insbesondere kann mit der Vorrichtung der Belegungsgrad der Transporteinrichtung unabhängig von der Art der Behälter zuverlässig erfasst werden. Somit ist keine Einstellung der Erfassungseinrichtungen auf die Art der Behälter erforderlich. Dadurch ergibt sich bei der Herstellung der Transporteinrichtung durch Wegfall von bisher erforderlicher aufwändiger Auswertesoftware eine deutliche Kostenersparnis. Zudem resultiert mit der Vorrichtung im Betrieb der Transporteinrichtung eine deutliche Zeit- und dadurch Kostenersparnis.

Darüber hinaus ist es möglich, die Vorrichtung aufgrund ihrer einfachen Bauart im Wesentlichen unabhängig von der Breite des zu erfassenden Transportbandes einzusetzen. Insbesondere ist es möglich, die Vorrichtung auch bei Transportbandbreiten > 600 mm, insbesondere bis zu Transportbandbreiten von ca. 1200 mm, einzusetzen, was mit den bekannten Lösungen bis heute Schwierigkeiten bereitet.

Vorteilhafte weitere Ausgestaltungen der Vorrichtung sind in den abhängigen Patentansprüchen angegeben.

Erfindungsgemäß ist die Einstelleinrichtung zum Einstellen von mindestens zwei Erfassungseinrichtungen derart ausgestaltet, dass eine Erfassungseinrichtung der Erfassungseinrichtungen mit der Transporteinrichtung transportiertes Transportgut erfasst und die andere Erfassungseinrichtung der Erfassungseinrichtungen die Transporteinrichtung ohne transportiertes Transportgut erfasst, und wobei die Ermittlungseinrichtung den aktuellen Belegungsgrad der Transporteinrichtung auf der Grundlage der von der Einstelleinrichtung eingestellten Position von mindestens einer der Erfassungseinrichtungen ermittelt.

Die Aufgabe wird zudem durch ein Verfahren zur Ermittlung eines Belegungsgrads einer Transporteinrichtung nach Patentanspruch 10 gelöst.

Das Verfahren erzielt die gleichen Vorteile, wie sie zuvor in Bezug auf die Vorrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:
Fig. 1 ein Blockschaltbild zur Veranschaulichung einer Maschine mit einer Vorrichtung gemäß einem ersten Ausführungsbeispiel;
Fig. 2 eine Draufsicht auf eine Transporteinrichtung der Maschine mit einer Vorrichtung gemäß dem ersten Ausführungsbeispiel;
Fig. 3 ein dreidimensionales Detail einer Vorrichtung zur Ermittlung eines Belegungsgrads der Transporteinrichtung gemäß dem ersten Ausführungsbeispiel;
Fig. 4 eine Seitenansicht der Vorrichtung zur Ermittlung eines Belegungsgrads der Transporteinrichtung gemäß dem ersten Ausführungsbeispiel;
Fig. 5 eine Seitenansicht einer Vorrichtung zur Ermittlung eines Belegungsgrads der Transporteinrichtung gemäß einem zweiten Ausführungsbeispiel; und
Fig. 6 eine Draufsicht auf eine Transporteinrichtung der Maschine mit einer Vorrichtung gemäß einem dritten Ausführungsbeispiel.

In den Figuren sind gleiche oder funktionsgleiche Elemente, sofern nichts anderes angegeben ist, mit denselben Bezugszeichen versehen.

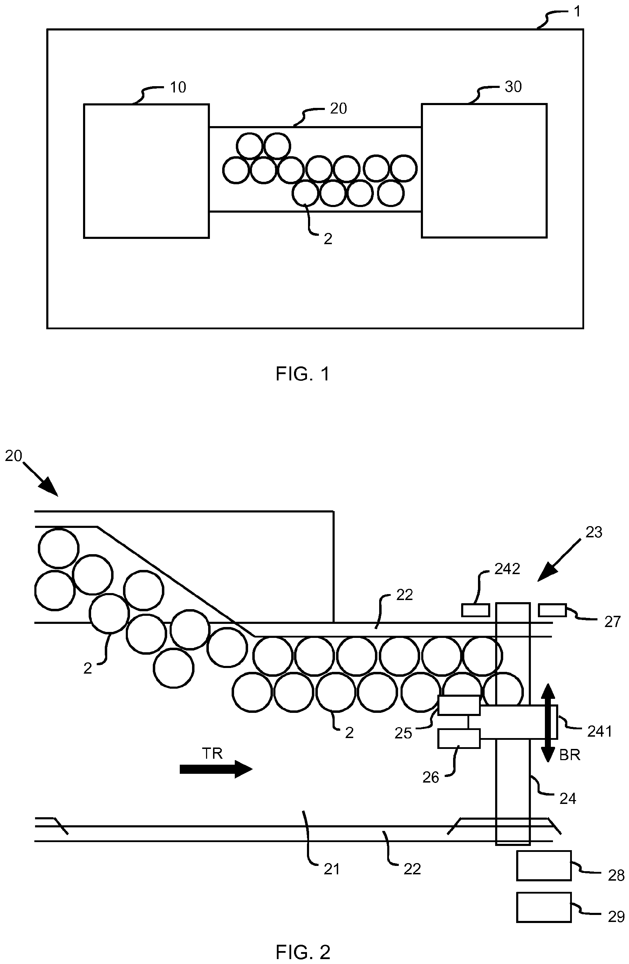

Fig. 1 zeigt eine Maschine 1, die beispielsweise eine Behälterbehandlungsanlage sein kann. In der Behälterbehandlungsanlage werden Behälter 2, insbesondere transparente Kunststoffflaschen, Glasflaschen, Metalldosen, leer, voll, verschlossen, unverschlossen, etikettiert, nicht etikettiert usw., produziert und/oder behandelt. Auch wenn die Maschine 1 nachfolgend teilweise am Beispiel einer Behälterbehandlungsanlage beschrieben ist, ist die Maschine 1 nicht darauf beschränkt. In Fig. 1 sind der Einfachheit halber nicht alle Behälter 2 mit einem Bezugszeichen versehen.

Die Maschine 1 hat eine erste Behandlungseinrichtung 10, eine Transporteinrichtung 20 und eine zweite Behandlungseinrichtung 30. Die erste Behandlungseinrichtung 10 ist beispielsweise eine Etikettiereinrichtung zum Etikettieren von Behältern 2 mit einem Etikett. Die zweite Behandlungseinrichtung 30 ist beispielsweise eine Fülleinrichtung zum Füllen der Behälter 2 mit einem Medium, wie beispielsweise einer Flüssigkeit, eines Pulvers, usw., insbesondere eines Getränks, eines Reinigungsmittels, usw.. Die Transporteinrichtung 20 transportiert die Behälter 2 als Transportgut von der ersten Behandlungseinrichtung 10 zu der zweiten Behandlungseinrichtung 30.

Fig. 2 zeigt einen Teil der Transporteinrichtung 20 genauer. Die Transporteinrichtung 20 hat ein Transportband 21 zum Transportieren von Transportgut, wie beispielsweise der Behälter 2, in einer Transportrichtung TR. Zudem hat die Transporteinrichtung 20 Geländer 22, die auf den beiden Seiten des Transportbands 21 angeordnet sind und das Transportgut auf dem Transportband 21 führen. In Fig. 2 ist das Transportband 21 und damit die Transporteinrichtung 20 nur teilweise mit Transportgut in Form der Behälter 2 belegt. Somit ist der andere Teil des Transportbands 21 frei von Transportgut in Form der Behälter 2. In Fig. 2 beträgt der Belegungsgrad der Transporteinrichtung 20 in etwa 35 %. Demzufolge sind in etwa 65% der Transporteinrichtung 20 nicht mit Transportgut in Form der Behälter 2 belegt.

Wie zudem in Fig. 2 dargestellt, ist an der Transporteinrichtung 20 eine Vorrichtung 23 zur Ermittlung eines Belegungsgrads der Transporteinrichtung 20 montiert. Die Vorrichtung 23 hat eine Stützeinrichtung 24, eine Aufnahmeeinheit 241, eine Antriebseinrichtung 242, eine erste Erfassungseinrichtung 25, eine zweite Erfassungseinrichtung 26, eine Positionserfassungseinrichtung 27, eine Einstelleinrichtung 28 und eine Ermittlungseinrichtung 29. Die Aufnahmeeinheit 241 ist mit der Antriebseinrichtung 242 in einer Bewegungsrichtung BR bewegbar. Die Einstelleinrichtung 28 ist mit der Antriebseinrichtung 242 kombiniert bzw. steuert diese an.

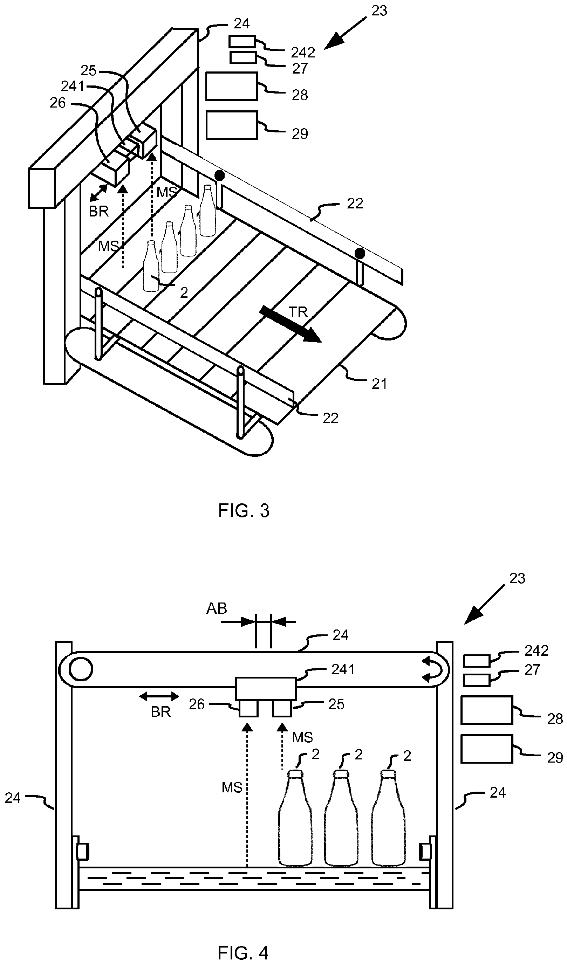

Wie auch aus Fig. 3 und Fig. 4 ersichtlich, ist ein Teil der Stützeinrichtung 24 zusammen mit der Aufnahmeeinheit 241 und der ersten und zweiten Erfassungseinrichtung 25, 26 über der Transporteinrichtung 20 angeordnet. Genauer gesagt, sind die Aufnahmeeinheit 241 und die erste und zweite Erfassungseinrichtung 25, 26 über dem Transportband 21 angeordnet. Die Stützeinrichtung 24 ist als ein U-förmiges Gestell ausgestaltet, an welchem die Aufnahmeeinheit 241 befestigt ist.

An der Aufnahmeeinheit 241 sind die erste und zweite Erfassungseinrichtung 25, 26 aufgenommen und zwar derart, dass die erste und zweite Erfassungseinrichtung 25, 26 um den festen vorbestimmten Abstand AB zueinander beabstandet sind, wie in Fig. 4 dargestellt. Anders ausgedrückt, stützt die Stützeinrichtung 24 die erste Erfassungseinrichtung 25 mit dem vorbestimmten festen Abstand AB zur zweiten Erfassungseinrichtung 26.

Die Aufnahmeeinheit 241 ist dagegen an der Stützeinrichtung 24 beweglich gelagert. Dadurch kann die Aufnahmeeinheit 241 zusammen mit der ersten und zweiten Erfassungseinrichtung 25, 26 als eine Einheit gegenüber der Stützeinrichtung 24 in Richtung des mit BR bezeichneten Pfeils bewegt werden. Der Pfeil gibt somit die Bewegungsrichtung BR der Aufnahmeeinheit 241 und der ersten und zweiten Erfassungseinrichtung 25, 26 an.

Wie in Fig. 2 und Fig. 3 gezeigt, ist die Aufnahmeeinheit 241 bei dem vorliegenden Ausführungsbeispiel als Schlitten ausgeführt, an welchem die erste und zweite Erfassungseinrichtung 25, 26 montiert sind. Der Schlitten kann von der Antriebseinrichtung 242 angetrieben werden, die insbesondere ein elektrischer Motor ist. Damit werden die Aufnahmeeinheit 241 und die Erfassungseinrichtungen 25, 26 in eine gemeinsame lineare Bewegung über die Transporteinrichtung 20 versetzt.

Demzufolge kann die Aufnahmeeinheit 241 zusammen mit der ersten und zweiten Erfassungseinrichtung 25, 26 über die Transporteinrichtung 20 in der Bewegungsrichtung BR hin und her bewegt werden. Anders ausgedrückt, die erste und zweite Erfassungseinrichtung 26, 27 können quer zur Transportrichtung TR relativ zur Transporteinrichtung 20 bewegt werden. Die Bewegungsrichtung BR der Aufnahmeeinheit 241 und der ersten und zweiten Erfassungseinrichtung 25, 26 ist quer, insbesondere senkrecht, zur Transportrichtung TR des Transportbands 21 angeordnet. Der Begriff "quer" umfasst hier einen Winkel zwischen 1° und 90° zur Transportrichtung TR. Dadurch kann die Vorrichtung 23 auch beispielsweise an einem Überschub zum Einsatz kommen, bei welchem die Behälter 2 von dem Transportband 21 auf ein seitlich daneben angeordnetes, weiteres Transportband 21 weitergeleitet werden. Hier könnte die Vorrichtung 23 dann auch in einer anderen Anordnung als rechtwinklig zur Transportrichtung TR angebracht sein.

Die Stützeinrichtung 24 ist also zum bewegbaren Stützen der ersten und zweiten Erfassungseinrichtung 25, 26 ausgestaltet, so dass die erste und zweite Erfassungseinrichtung 25, 26 gemeinsam linear über die Transporteinrichtung 20 bewegbar sind.

Die erste und zweite Erfassungseinrichtung 25, 26 sind jeweils insbesondere berührungslose und/oder tastende Sensoren, wie beispielsweise ein optischer Sensor, der mittels Licht, beispielsweise Infrarotlicht, Laserlicht, usw. arbeitet. Die erste und zweite Erfassungseinrichtung 25, 26 können jedoch jeweils auch ein akustischer Sensor sein, der mittels Schallwellen, vorzugsweise Ultraschall arbeitet. Zudem können die erste und zweite Erfassungseinrichtung 25, 26 jeweils auch ein kapazitiver Sensor sein. Die erste und zweite Erfassungseinrichtung 25, 26 sind derart ausgestaltet, dass die jeweilige Erfassungseinrichtung 25, 26 sowohl einen Sender zum Aussenden der Erfassungswellen als auch einen Empfänger zum Empfang der Erfassungswellen aufweisen. Wie in Fig. 3 und Fig. 4 veranschaulicht, werden die Erfassungswellen in Richtung eines mit MS bezeichneten Pfeils von der Transporteinrichtung 20 oder dem Transportgut zu den Erfassungseinrichtungen 25, 26 zurückgesendet. Befindet sich unter der ersten oder zweiten Erfassungseinrichtung 25, 26 Transportgut in Form eines Behälters 2, werden die vom Sender ausgesendeten Erfassungswellen anders zum Empfänger reflektiert als in dem Fall, bei welchem sich nur das Transportband 21 unter den Erfassungseinrichtungen 25, 26 befindet. Die erste und zweite Erfassungseinrichtung 25, 26 sind also zur Erfassung quer, insbesondere senkrecht, zur Transportebene in Form des Transportbands 21 der Transporteinrichtung 20 ausgestaltet.

Die Einstelleinrichtung 28 stellt die erste Erfassungseinrichtung 25 derart ein, dass die erste Erfassungseinrichtung 25 mit der Transporteinrichtung 20 transportiertes Transportgut erfasst, wie in Fig. 4 gezeigt. Bei der in Fig. 3 und Fig. 4 gezeigten Stellung der ersten Erfassungseinrichtung 25 erfasst die erste Erfassungseinrichtung 25 also das Transportgut in Form der Behälter 2.

Zudem stellt die Einstelleinrichtung 28 die zweite Erfassungseinrichtung 26 derart ein, dass die zweite Erfassungseinrichtung 26 die Transporteinrichtung 20 ohne transportiertes Transportgut erfasst, wie in Fig. 3 und Fig. 4 gezeigt. Bei der in Fig. 4 gezeigten Stellung der zweiten Erfassungseinrichtung 26 erfasst die zweite Erfassungseinrichtung 26 also kein Transportgut in Form der Behälter 2 sondern das Transportband 21.

Die Position der ersten und zweiten Erfassungseinrichtung 25, 26 und/oder der Aufnahmeeinheit 241 werden von einer Positionserfassungseinrichtung 27 erfasst und in Form eines oder mehrerer Erfassungssignale an die Ermittlungseinrichtung 29 weitergeleitet. Die Positionserfassungseinrichtung 27 kann ein Drehgeber, insbesondere ein Inkrementaldrehgeber, sein.

Zunächst ermittelt die Ermittlungseinrichtung 29, ob die Einstelleinrichtung 28 die erste und zweite Erfassungseinrichtung 25, 26 eingestellt hat, wie in Fig. 3 und Fig. 4 gezeigt und wie zuvor beschrieben. Ist dies der Fall, ermittelt die Ermittlungseinrichtung 29 den aktuellen Belegungsgrad der Transporteinrichtung 20. Hierbei verwendet die Ermittlungseinrichtung 29 die von der Positionserfassungseinrichtung 27 ermittelte Position der ersten und zweiten Erfassungseinrichtung 25, 26 an der Transporteinrichtung 20. Anders ausgedrückt, die Ermittlungseinrichtung 29 ermittelt den aktuellen Belegungsgrad der Transporteinrichtung 20 auf der Grundlage der von der Einstelleinrichtung 28 eingestellten Positionen der ersten und zweiten Erfassungseinrichtung 25, 26.

Der ermittelte Belegungsgrad kann zur Umsetzung von effizienten Regelalgorithmen, wie beispielsweise Regelung der Maschine 1, schneller Produktwechsel und/oder unsymmetrische dynamische Verteilung von Behälterströmen Verwendung finden.

Somit führt die Vorrichtung 23 keine direkte Messung des Belegungsgrads mittels beispielsweise opto-elektronischer Sensoren durch. Stattdessen fungieren die Erfassungseinrichtungen 25, 26 als Hilfsmittel für eine indirekte Messung, die weniger Aufwand, wie Hardware, Software, Kalibrierung, usw., erfordert.

Bei einem Verfahren zur Ermittlung eines Belegungsgrads der Transporteinrichtung wird also in einem Schritt mit der Einstelleinrichtung 28 die erste Erfassungseinrichtung 25 derart eingestellt, dass die erste Erfassungseinrichtung 25 mit der Transporteinrichtung 20 transportiertes Transportgut erfasst. Zudem stellt die Einstelleinrichtung 28 die zweite Erfassungseinrichtung 26 derart ein, dass die zweite Erfassungseinrichtung 26 die Transporteinrichtung 20 ohne transportiertes Transportgut erfasst. Danach ermittelt die Ermittlungseinrichtung 29 den aktuellen Belegungsgrad der Transporteinrichtung 20 auf der Grundlage der von der Einstelleinrichtung 28 eingestellten Position der ersten und zweiten Erfassungseinrichtung 25, 26.

Alternativ kann die Einstelleinrichtung 28 auch die zweite Erfassungseinrichtung 26 derart einstellen, dass die zweite Erfassungseinrichtung 26 mit der Transporteinrichtung 20 transportiertes Transportgut erfasst. In diesem Fall stellt die Einstelleinrichtung 28 die erste Erfassungseinrichtung 25 derart ein, dass die erste Erfassungseinrichtung 25 die Transporteinrichtung 20 ohne transportiertes Transportgut erfasst.

Ganz allgemein stellt die Einstelleinrichtung 28 die Erfassungseinrichtungen 25, 26 derart ein, dass eine der Erfassungseinrichtungen 25, 26 mit der Transporteinrichtung 20 transportiertes Transportgut erfasst und die andere der Erfassungseinrichtungen 25, 26 die Transporteinrichtung 20 ohne transportiertes Transportgut erfasst.

Dem zuvor beschriebenen Verfahren zur Ermittlung des Belegungsgrads geht eine initiale Referenzierung der Vorrichtung 23 voraus. Die Referenzierung kann beispielsweise über ein lineares Verfahren der mindestens einen Erfassungseinrichtung 25, 26 und/oder der Aufnahmeeinrichtung 241 aus einer definierten Startposition, beispielsweise 0% oder 100% Belegungsgrad der Transporteinrichtung 20, über die gesamte Breite der Vorrichtung erfolgen. Dabei wird mittels eines Sensors, vorzugsweise mittels eines Endlagenschalters, das Erreichen des maximal möglichen Verfahrweges der Erfassungseinrichtungen und/oder der Aufnahmeeinrichtung erkannt und diese Position dann - je nach Startposition - als 0% bzw. 100% definiert.

Zum Erkennen eines Belegungsgrads von 0% oder 100%, bei welchen eine der Erfassungseinrichtungen 25, 26 an der 0% bzw. 100%-Position an der Transporteinrichtung 20 angeordnet ist, müssen die Erfassungseinrichtungen 25, 26 nicht unbedingt einen Endlagenschalter aufweisen. Die Erfassungseinrichtungen 25, 26 können auch ausgestaltet sein, das Geländer 22 zu erkennen. Hierbei wird genutzt, dass das Geländer 22 höher als das Transportband 21 ist, auf das die Erfassungseinrichtungen 25, 26 vor deren Betrieb referenziert sind. Als zusätzliche Sicherheit können jedoch auch nicht dargestellte Endlagenschalter eingebaut sein, damit z. B. die Antriebseinrichtung 242 mit dem Verfahren der Aufnahmeeinrichtung 241 stoppt, wenn die maximale Verfahrstrecke in der Bewegungsrichtung BR an der Stützeinrichtung 24 bzw. über der Transporteinrichtung 20 erreicht ist.

Somit besteht eine weitere Möglichkeit zur Referenzierung darin, dass die Erfassungseinrichtungen 25, 26 und/oder die Aufnahmeeinrichtung 241 bei leerem Transportband 21 so lange linear von ihrer Startposition aus verfahren werden/wird, bis erkannt wird, dass die mindestens eine Erfassungseinrichtung 25, 26 nicht mehr das Transportband 21, sondern beispielsweise ein Geländer 22 erfasst.

Ebenfalls denkbar ist, dass auf die Oberseite der beiderseitigen Geländer 22 Reflektoren aufgebracht werden und die mindestens eine Erfassungseinrichtung 25, 26 von der Startposition aus so lange verfahren wird, bis sie einen ersten Reflektor und damit das zugehörige Geländer 22 erfasst. Anschließend erfolgt eine Richtungsumkehr der betrachteten Erfassungseinrichtung 25 und/oder 26 so lange bis ein zweiter Reflektorstreifen erfasst wird. Auf Basis der Verfahrwege kann dann auf die 0% bzw. 100% Position der betrachteten Erfassungseinrichtung 25 und/oder 26 geschlossen werden.

Auch ist es möglich, dass bei Auslösen eines mechanischen Stauschalters, der im Bereich der Geländer 22 unterhalb der Vorrichtung 23 angebracht ist, während des Betriebs der Transporteinrichtung 20 die Position der mindestens einen Erfassungseinrichtung 25, 26 und/oder der Aufnahmeeinrichtung 241 zum Zeitpunkt des Auslösens als 100% Belegungsgrad referenziert wird. Dies ermöglicht eine (zusätzliche) Referenzierung wann immer es zu einer Stausituation auf der Transporteinrichtung 20 kommt, bei der das Transportband 21 vollständig mit Behältern 2 belegt ist.

Die genannten Möglichkeiten zur Referenzierung können dabei manuell, beispielsweise über einen Software-Befehl oder einen mechanischen Schalter, und/oder automatisch durchgeführt werden.

Somit bildet die Vorrichtung 23 ein System, das zwei einfache, tastende Sensoren, die Erfassungseinrichtungen 25, 26, aufweist. Die Sensoren sind gemeinsam linear verfahrbar und in einem definierten Abstand AB zueinander, insbesondere senkrecht, über dem Transportband 21 angebracht. Die Aufnahmeeinheit 241 als Linearachse ist hierbei insbesondere motorisch verstellbar und die Position der angebrachten Sensoren über dem Transportband 21 messbar. Die Sensoren werden nun stets in eine Position gebracht, dass einer von ihnen den aus den Behältern 2 als Transportgut gebildeten Behälterstrom erfasst und der andere Sensor frei bleibt. Bei Erkennen eines anderen Zustands wird von der Einstelleinrichtung 28 so lange definiert nachtjustiert, bis der gewünschte Zustand wieder erreicht wird. Durch Auswerten der Sensorposition kann auf den aktuellen Belegungsgrad des Transportbands 21 und damit der Transporteinrichtung 20 rückgeschlossen werden.

Insgesamt bietet die Vorrichtung 23 einen einfachen und wenig störanfälligen Weg, um den Belegungsgrad der Transporteinrichtung 20 zu ermitteln oder zu messen. Die verwendeten Erfassungseinrichtungen 25, 26 müssen lediglich grob erkennen können, ob ein Behälterstrom auf dem von der jeweiligen Erfassungseinrichtung 25, 26 erfassten Bereich der Transporteinrichtung 20 vorhanden ist, oder nicht. Dies entspricht einer digitalen Erfassung mit 0 und 1 und ist keine genaue Messung, beispielsweise in Bezug auf Lichtlaufzeiten, Helligkeit, Schallwellenlaufzeiten, usw.. Die Aufnahmeeinrichtung 241, an welcher die Erfassungseinrichtungen 25, 26 befestigt sind, verfährt solange quer, insbesondere senkrecht, zur Transportrichtung TR der Transporteinrichtung 20 oder insbesondere parallel zur vom Transportband 21 gebildeten Transportebene, bis eine der Erfassungseinrichtungen 25, 26 den Behälterstrom erfasst und die andere der Erfassungseinrichtungen 25, 26 "frei" ist. Die Position der Aufnahmeeinrichtung 241 bei Eintritt dieses Zustands kann dann in den Belegungsgrad der Transporteinrichtung 20 umgerechnet werden.

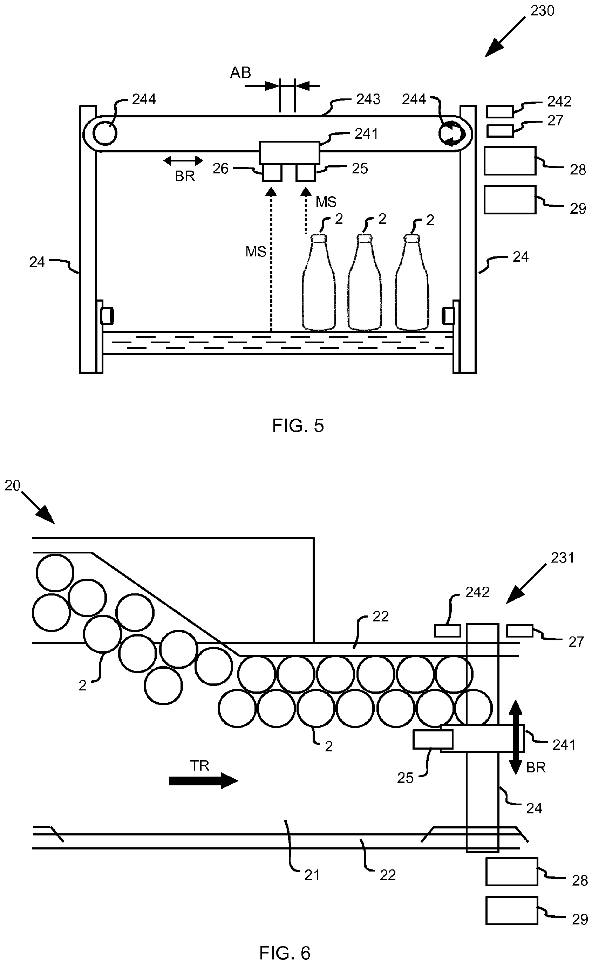

Fig. 5 zeigt eine Vorrichtung 230 an einer Transporteinrichtung 20 gemäß einem zweiten Ausführungsbeispiel. Bei dem vorliegenden Ausführungsbeispiel ist die Aufnahmeeinheit 241 an einer Zugeinheit 243, wie beispielsweise einem Zugseil, angeordnet, welche die Aufnahmeeinheit 241 und damit die erste und zweite Erfassungseinrichtung 25, 26 durch Ziehen um Umlenkwellen 244 in eine gemeinsame lineare Bewegung über die Transporteinrichtung 20 versetzt. Zumindest eine der Umlenkwellen 244 kann von einer Antriebseinrichtung 242, insbesondere einem elektrischen Motor, angetrieben werden. Ansonsten ist die Maschine 1 gemäß dem zweiten Ausführungsbeispiel auf die gleiche Weise ausgeführt wie bei dem vorangegangenen Ausführungsbeispiel.

Fig. 6 zeigt eine Vorrichtung 231 an einer Transporteinrichtung 20 gemäß einem dritten Ausführungsbeispiel. Bei dem vorliegenden Ausführungsbeispiel ist an der Aufnahmeeinheit 241 nur die erste Erfassungseinrichtung 25 als einzige Erfassungseinrichtung angeordnet. Ansonsten ist die Vorrichtung 231 auf dieselbe Weise aufgebaut wie die Vorrichtung 23 gemäß dem ersten Ausführungsbeispiel.

Da somit nur eine Erfassungseinrichtung, nämlich die erste Erfassungseinrichtung 25, zur Ermittlung des Belegungsgrads der Transporteinrichtung 20 vorhanden ist, führt die Vorrichtung 231 gemäß dem vorliegenden Ausführungsbeispiel das nachfolgend beschriebene Verfahren aus.

Zur Ermittlung des Belegungsgrads der Transporteinrichtung 20 verfährt die Erfassungseinrichtung 25 von der Position aus, welche einem Belegungsgrad der Transporteinrichtung 20 von 0% entspricht, so lange bis die Erfassungseinrichtung 25 keinen Behälter 2 mehr erfasst oder "sieht". Bei vollständiger Belegung der Transporteinrichtung 20 mit Behältern 2 verfährt die Erfassungseinrichtung 25 bis zu der Position, welche einem Belegungsgrad der Transporteinrichtung 20 von 100% entspricht. Die beiden Positionen können auch als 0%-Position und 100%-Position bezeichnet werden. Bei der 0%-Position und der 100%-Position erfasst die Erfassungseinrichtung 25 jeweils die Transporteinrichtung 20 ohne transportiertes Transportgut, nämlich beispielsweise das Geländer 22 der Transporteinrichtung 20.

Ansonsten führt die Vorrichtung 231 die gleichen Verfahren aus wie die Vorrichtung 23 gemäß dem ersten Ausführungsbeispiel.

Gemäß einem vierten Ausführungsbeispiel werden bei den Vorrichtungen 23 gemäß dem ersten oder zweiten Ausführungsbeispiel zwei Aufnahmeeinrichtungen 241 mit je zwei Erfassungseinrichtungen 25, 26 eingesetzt werden. Die zwei Aufnahmeeinrichtungen 241 können dann entweder mit festem Abstand zueinander verfahren werden, also steuerbar sein, oder unabhängig voneinander. Eine derartige Anordnung hat den Vorteil, dass die Ausmaße eines Behälterstroms, der mittig auf dem Transportband 21 der Transporteinrichtung 20 transportiert wird, von zwei Seiten erfasst werden können. Somit kann auch auf diese Weise der Belegungsgrad der Transporteinrichtung 20 bestimmt werden.

Gemäß einem fünften Ausführungsbeispiel ist es auch möglich, dass bei dem ersten, zweiten oder vierten Ausführungsbeispiel auch für jede Erfassungseinrichtung 25, 26 eine separate Aufnahmeeinrichtung 241 vorhanden sein kann. Auch hier können die zwei Aufnahmeeinrichtungen 241 mit der jeweiligen Erfassungseinrichtung 25, 26 entweder gekoppelt sein, wodurch sie mit festem Abstand zueinander verfahren werden, also steuerbar sind, oder jeweils separat mit einer Antriebseinrichtung 242 angetrieben werden. Hier ist der Steueraufwand zur Steuerung der Erfassungseinrichtungen 25, 26 jedoch höher als bei den zuvor beschriebenen Ausführungsbeispielen mit zwei Erfassungseinrichtungen 25, 26.

Alle zuvor beschriebenen Ausgestaltungen der Transporteinrichtung 20, der Vorrichtungen 23, 230, 231 und des Verfahrens können einzeln oder in allen möglichen Kombinationen Verwendung finden. Insbesondere können Merkmale auch weglassen werden, solange sie nicht als wesentlich für die Erfindung beschrieben sind. Zudem sind die Merkmale aller beschriebenen Ausführungsbeispiele beliebig kombinierbar. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Transporteinrichtung 20 kann mindestens ein weiteres Transportband aufweisen, welches unabhängig von dem Transportband 21 mit unterschiedlicher Geschwindigkeit zum Transportband 21 antreibbar ist.

Von den Erfassungseinrichtungen 25, 26 kann auch eine als optischer Sensor und die andere als akustischer Sensor ausgeführt sein. Weiterhin ist eine Kombination aller in der Beschreibung der Erfindung erwähnten Sensorarten denkbar.

Es können auch mehr als die beiden Erfassungseinrichtungen 25, 26 vorhanden sein, solange eine davon von der Einstelleinrichtung 28 zur Erfassung des Transportguts und die andere zur Erfassung des Transportbands 21 eingestellt wird.

Es ist auch möglich, dass eine der Erfassungseinrichtungen 25, 26, welche zuvor zur Erfassung des Transportbands 21 eingestellt war, anschließend zur Erfassung des Transportguts eingestellt wird und umgekehrt.

Die Einstelleinrichtung 28 und die Ermittlungseinrichtung 29 können von einer Steuereinrichtung der Maschine 1 oder einer Steuereinrichtung der Transporteinrichtung 20 ausgeführt sein. Somit können die Einstelleinrichtung 28 und die Ermittlungseinrichtung 29 in einer Einrichtung, beispielsweise einem Rechner, insbesondere als Steuereinrichtung der Maschine 1, kombiniert sein. Es ist auch möglich, dass die Einstelleinrichtung 28 von einer Steuereinrichtung der Transporteinrichtung 20 und die Ermittlungseinrichtung 29 von einer Steuereinrichtung der Maschine 1 ausgeführt wird.

### Bezugszeichenliste

- 1: Maschine
- 2: Behälter
- 10: Erste Behälterbehandlungseinrichtung
- 20: Transporteinrichtung
- 21: Transportband
- 22: Geländer
- 23: Vorrichtung
- 24: Stützeinrichtung
- 241: Aufnahmeeinheit
- 242: Antriebseinrichtung
- 243: Zugeinheit
- 244: Umlenkwelle
- 25: Erste Erfassungseinrichtung
- 26: Zweite Erfassungseinrichtung
- 27: Positionserfassungseinrichtung
- 28: Einstelleinrichtung
- 29: Ermittlungseinrichtung
- 30: Zweite Behälterbehandlungseinrichtung
- 230,231: Vorrichtung
- AB: Vorbestimmter fester Abstand
- BR: Bewegungsrichtung
- MS: Richtung des Messsignals
- TR: Transportrichtung

## Patentansprüche

1. Vorrichtung (23) zur Ermittlung eines Belegungsgrads einer Transporteinrichtung (20), mit
mindestens einer ersten und einer zweiten Erfassungseinrichtung (25, 26), welche sowohl einen Sender zum Aussenden von Erfassungswellen als auch einen Empfänger zum Empfang der Erfassungswellen aufweist,
einer Einstelleinrichtung (28), die ausgestaltet ist, die Position der mindestens zwei Erfassungseinrichtungen (25, 26) relativ zu der Transporteinrichtung (20) derart einzustellen, dass die mindestens zwei Erfassungseinrichtungen (25, 26) nach Erfassen von mit der Transporteinrichtung (20) transportiertem Transportgut die Transporteinrichtung (20) ohne transportiertes Transportgut erfasst oder umgekehrt, wobei die Einstelleinrichtung (28) ausgestaltet ist, die Position der mindestens zwei Erfassungseinrichtungen (25, 26) relativ zur Transporteinrichtung (20) einzustellen durch Bewegen der mindestens zwei Erfassungseinrichtungen (25, 26) quer zu einer Transportrichtung (TR) von mit der Transporteinrichtung (20) transportiertem Transportgut solange, bis eine Erfassungseinrichtung (25) der Erfassungseinrichtungen (25, 26) mit der Transporteinrichtung (20) transportiertes Transportgut erfasst und die andere Erfassungseinrichtung (26) der Erfassungseinrichtungen (25, 26) die Transporteinrichtung (20) ohne transportiertes Transportgut erfasst, und
einer Ermittlungseinrichtung (29), die ausgestaltet ist, einen aktuellen Belegungsgrad der Transporteinrichtung (20) mit Transportgut auf der Grundlage der von der Einstelleinrichtung (28) relativ zur Transporteinrichtung (20) eingestellten Position von mindestens einer der Erfassungseinrichtungen (25, 26) zu ermitteln.

2. Vorrichtung (23) nach Anspruch 1, zudem mit einer Stützeinrichtung (24) zum bewegbaren Stützen der mindestens zwei Erfassungseinrichtungen (25, 26), so dass die mindestens zwei Erfassungseinrichtungen (25, 26) quer zu einer Transportrichtung (TR) von mit der Transporteinrichtung (20) transportiertem Transportgut hin und her bewegbar sind.

3. Vorrichtung (23) nach Anspruch 2, wobei die Stützeinrichtung (24) zum Stützen der mindestens zwei Erfassungseinrichtungen (25, 26) derart ausgestaltet ist, dass die mindestens zwei Erfassungseinrichtungen (25, 26) mit einem vorbestimmten festen Abstand (AB) zueinander angeordnet sind.

4. Vorrichtung (23) nach Anspruch 2 oder 3, wobei die Stützeinrichtung (24) zur Anordnung der mindestens zwei Erfassungseinrichtungen (25, 26) über der Transporteinrichtung (20) ausgestaltet ist,

5. Vorrichtung (23) nach einem der vorangehenden Ansprüche 2 bis 4, wobei die Stützeinrichtung (24) zur Aufnahme der mindestens zwei Erfassungseinrichtungen (25, 26) eine Aufnahmeeinrichtung (241) aufweist, die als Schlitten oder Zugseil derart ausgestaltet ist, dass die mindestens zwei Erfassungseinrichtungen (25, 26) linear über die Transporteinrichtung (20) bewegbar sind.

6. Vorrichtung (23) nach einem der vorangehenden Ansprüche 2 bis 5, zudem mit einer Positionserfassungseinrichtung (27), die ausgestaltet ist, eine Position mindestens einer Erfassungseinrichtung (25, 26) und/oder einer mindestens eine Erfassungseinrichtung (25, 26) aufnehmenden Aufnahmeeinrichtung (241) an der Stützeinrichtung (24) zu erfassen.

7. Vorrichtung (23) nach einem der Ansprüche 2 bis 6, wobei mindestens eine Erfassungseinrichtung (25, 26) einen berührungslosen Sensor umfasst.

8. Transporteinrichtung (20) zum Transport von Behältern (2), mit
einem Transportband (21) zum Transport der Behälter (2) in einer vorbestimmten Transportrichtung (TR), und
einer Vorrichtung (23) nach einem der vorangehenden Ansprüche.

9. Transporteinrichtung (20) nach Anspruch 8,
zudem mit mindestens einem weiteren Transportband, welches unabhängig von dem Transportband (21) mit unterschiedlicher Geschwindigkeit zu dem Transportband (21) antreibbar ist, und/oder
wobei die mindestens zwei Erfassungseinrichtungen (25, 26) zur Erfassung quer zur Transportebene der Transporteinrichtung (20) ausgestaltet sind.

10. Verfahren zur Ermittlung eines Belegungsgrads einer Transporteinrichtung (20), wobei das Verfahren mit einer Vorrichtung (23) ausgeführt wird, die eine Einstelleinrichtung (28), eine Ermittlungseinrichtung (29), und mindestens zwei Erfassungseinrichtungen (25 26) aufweist, welche sowohl einen Sender zum Aussenden von Erfassungswellen als auch einen Empfänger zum Empfang der Erfassungswellen aufweist, und wobei das Verfahren die Schritte aufweist
Einstellen, mit der Einstelleinrichtung (28), der Position der mindestens zwei Erfassungseinrichtungen (25, 26) relativ zu der Transporteinrichtung (20) derart, dass die mindestens eine Erfassungseinrichtung (25) nach Erfassen von mit der Transporteinrichtung (20) transportiertem Transportgut die Transporteinrichtung (20) ohne transportiertes Transportgut erfasst oder umgekehrt, wobei die Einstelleinrichtung (28) die Position der mindestens zwei Erfassungseinrichtungen (25, 26) relativ zur Transporteinrichtung (20) einstellt durch Bewegen der mindestens zwei Erfassungseinrichtungen (25, 26) quer zu einer Transportrichtung (TR) von mit der Transporteinrichtung (20) transportiertem Transportgut solange, bis eine Erfassungseinrichtung (25) der Erfassungseinrichtungen (25, 26) mit der Transporteinrichtung (20) transportiertes Transportgut erfasst und die andere Erfassungseinrichtung (26) der Erfassungseinrichtungen (25, 26) die Transporteinrichtung (20) ohne transportiertes Transportgut erfasst, und
Ermitteln, mit der Ermittlungseinrichtung (29), eines aktuellen Belegungsgrads der Transporteinrichtung (20) mit Transportgut auf der Grundlage der von der Einstelleinrichtung (28) relativ zur Transporteinrichtung (20) eingestellten Position von mindestens einer der Erfassungseinrichtungen (25, 26).

## Claims

1. A device (23) for determining an occupancy rate of a conveying means (20), the device (23) comprising
at least one first and one second detecting means (25, 26), which both comprise a sender for sending detecting waves and a receiver for receiving the detecting waves,
adjusting means (28) which is configured to adjust the position of the at least two detecting means (25, 26) relative to the conveying means (20) such that the at least two detecting means (25, 26) detect, after detecting freight conveyed by the conveying means (20), the conveying means (20) without conveyed freight, or vice versa, wherein the adjusting means (28) is configured to adjust the position of the at least two detecting means (25, 26) relative to the conveying means (20) by moving the at least two detecting means (25, 26) transverse to a conveying direction (TR) of freight conveyed by the conveying means (20) until one detecting means (25) of the detecting means (25, 26) detects freight conveyed by the conveying means (20) and the other detecting means (26) of the detecting means (25, 26) detects the conveying means (20) without conveyed freight, and
determining means (29) which is configured to determine a current occupancy rate of the conveying means (20) with freight on the basis of the position of at least one of the detecting means (25, 26), wherein the position was adjusted by the adjusting means (28) relative to the conveying means (20).

2. The device (23) according to claim 1, further comprising supporting means (24) for movably supporting the at least two detecting means (25, 26) so that the at least two detecting means (25, 26) are movable back and forth and transverse to a conveying direction (TR) of freight conveyed by the conveying means (20).

3. The device (23) according to claim 2, wherein the supporting means (24) is configured to support the at least two detecting means (25, 26) such that the at least two detecting means (25, 26) are positioned with a predetermined fixed distance (AB) to each other.

4. The device (23) according to claim 2 or 3, wherein the supporting means (24) is configured for positioning the at least two detecting means (25, 26) above the conveying means (20).

5. The device (23) according to one of the preceding claims 2 to 4, wherein the supporting means (24) comprises an accommodating unit (241) which is configured for accommodating the at least two detecting means (25, 26) and which is configured as a sledge or towing rope such that the at least two detecting means (25, 26) are linearly moveable across the conveying means (20).

6. The device (23) according to one of the preceding claims 2 to 5, further comprising position detecting means (27) which is configured to detect a position of at least one detecting means (25, 26) at the supporting means (24) and/or a position of an accommodating unit (241) at the supporting means (24), wherein the accommodating unit (241) accommodates at least one detecting means (25, 26).

7. The device (23) according to one of claims 2 to 6, wherein at least one detecting means (25, 26) comprises a contactless sensor.

8. A conveying means (20) for conveying containers (2), the conveying means (20) comprising
a conveyor belt (21) for conveying the containers (2) in a predetermined conveying direction (TR), and
a device (23) according to one of the preceding claims.

9. The conveying means (20) according to claim 8,
wherein the conveying means (20) further comprises at least one other conveyor belt which is drivable independently from the conveyor belt (21) with a velocity different from the velocity of the conveyor belt (21), and/or
wherein the at least two detecting means (25, 26) are configured to detect transverse to the conveying level of the conveying means (20).

10. A method for determining an occupancy rate of a conveying means (20), wherein the method is executed by a device (23) which comprises adjusting means (28), determining means (29), and at least two detecting means (25, 26) which both comprise a sender for sending detecting waves and a receiver for receiving the detecting waves, and wherein the method comprises the steps of:
adjusting, by the adjusting means (28), the position of the at least two detecting means (25, 26) relative to the conveying means (20) such that the at least one detecting means (25) detects, after detecting freight conveyed by the conveying means (20), the conveying means (20) without conveyed freight, or vice versa, wherein the adjusting means (28) is configured to adjust the position of the at least two detecting means (25, 26) relative to the conveying means (20) by moving the at least two detecting means (25, 26) transverse to a conveying direction (TR) of freight conveyed by the conveying means (20) until one detecting means (25) of the detecting means (25, 26) detects freight conveyed by the conveying means (20) and the other detecting means (26) of the detecting means (25, 26) detects the conveying means (20) without conveyed freight, and
determining, by the determining means (29), a current occupancy rate of the conveying means (20) with freight on the basis of the position of at least one of the detecting means (25, 26), wherein the position was adjusted by the adjusting means (28) relative to the conveying means (20).

## Revendications

1. Dispositif (23) permettant de déterminer un taux d'occupation d'un moyen de transport (20), le dispositif (23) comprenant :
au moins des premier et second moyens de détection (25, 26) qui comprennent tous deux un émetteur destiné à envoyer des ondes de détection et un récepteur destiné à recevoir les ondes de détection,
un moyen de réglage (28) qui est conçu pour régler la position des au moins deux moyens de détection (25, 26) par rapport au moyen de transport (20), de manière que les au moins deux moyens de détection (25, 26) détectent, après avoir détecté les marchandises transportées par le moyen de transport (20), le moyen de transport (20) sans marchandises transportées ou vice versa, dans lequel le moyen de réglage (28) est conçu pour régler la position des au moins deux moyens de détection (25, 26) par rapport au moyen de transport (20) en déplaçant les au moins deux moyens de détection (25, 26) transversalement à une direction de transport (TR) des marchandises transportées par le moyen de transport (20) jusqu'à ce qu'un moyen de détection (25) des moyens de détection (25, 26) détecte les marchandises transportées par le moyen de transport (20) et que l'autre moyen de détection (26) des moyens de détection (25, 26) détecte le moyen de transport (20) sans marchandises transportées, et
un moyen de détermination (29) qui est conçu pour déterminer un taux d'occupation actuel du moyen de transport (20) par les marchandises, sur la base de la position d'au moins l'un des moyens de détection (25, 26), dans lequel la position a été réglée par le moyen de réglage (28) par rapport au moyen de transport (20).

2. Dispositif (23) selon la revendication 1, comprenant en outre un moyen de support (24) destiné à supporter en mouvement les au moins deux moyens de détection (25, 26) de manière que les au moins deux moyens de détection (25, 26) puissent se déplacer en va-et-vient et transversalement à une direction de transport (TR) des marchandises transportées par le moyen de transport (20).

3. Dispositif (23) selon la revendication 2, dans lequel le moyen de support (24) est conçu pour supporter les au moins deux moyens de détection (25, 26), de manière que les au moins deux moyens de détection (25, 26) soient positionnés à une distance fixe prédéterminée (AB) l'un de l'autre.

4. Dispositif (23) selon la revendication 2 ou 3, dans lequel le moyen de support (24) est conçu pour positionner les au moins deux moyens de détection (25, 26) au-dessus du moyen de transport (20).

5. Dispositif (23) selon l'une des revendications 2 à 4 précédentes, dans lequel le moyen de transport (24) comprend un moyen de réception (241) qui est conçu pour accueillir les au moins deux moyens de détection (25, 26) et qui est conçu sous la forme d'un traîneau ou d'une corde de traction, de manière que les au moins deux moyens de détection (25, 26) puissent se déplacer linéairement en travers du moyen de transport (20).

6. Dispositif (23) selon l'une des revendications 2 à 5 précédentes, comprenant en outre un moyen de détection de position (27) qui est conçu pour détecter une position d'au moins un moyen de détection (25, 26) au niveau du moyen de support (24) et/ou une position d'unité de réception (241) au niveau du moyen de support (24), dans lequel l'unité de réception (241) accueille au moins un moyen de détection (25, 26).

7. Dispositif (23) selon l'une des revendications 2 à 6, dans lequel au moins un moyen de détection (25, 26) comprend un capteur sans contact.

8. Moyen de transport (20) destiné à transporter des conteneurs (2), le moyen de transport (20) comprenant :
une courroie transporteuse (21) destinée à transporter les conteneurs (2) dans une direction de transport prédéterminée (TR), et
un dispositif (23) selon l'une des revendications précédentes.

9. Moyen de transport (20) selon la revendication 8,
dans lequel le moyen de transport (20) comprend en outre au moins une autre courroie transporteuse qui peut être entraînée indépendamment de la courroie transporteuse (21), à une vitesse différente de la vitesse de la courroie transporteuse (21), et/ou dans lequel les au moins deux moyens de détection (25, 26) sont conçus pour détecter transversalement au transport le niveau du moyen de transport (20).

10. Procédé permettant de déterminer un taux d'occupation d'un moyen de transport (20), dans lequel le procédé est mis en oeuvre par un dispositif (23) qui comprend un moyen de réglage (28), un moyen de détermination (29), et au moins deux moyens de détection (25, 26) qui comprennent tous deux un émetteur destiné à envoyer des ondes de détection et un récepteur destiné à recevoir les ondes de détection, et
dans lequel le procédé comprend les étapes consistant à :
régler, à l'aide du moyen de réglage (28), la position des au moins deux moyens de détection (25, 26) par rapport au moyen de transport (20), de manière que l'au moins un moyen de détection (25) détecte, après avoir détecté les marchandises transportées par le moyen de transport (20), le moyen de transport (20) sans marchandises transportées ou vice versa, dans lequel le moyen de réglage (28) est conçu pour régler la position des au moins deux moyens de détection (25, 26) par rapport au moyen de transport (20) en déplaçant les au moins deux moyens de détection (25, 26) transversalement à une direction de transport (TR) des marchandises transportées par le moyen de transport (20) jusqu'à ce qu'un moyen de détection (25) des moyens de détection (25, 26) détecte les marchandises transportées par le moyen de transport (20) et que l'autre moyen de détection (26) des moyens de détection (25, 26) détecte le moyen de transport (20) sans marchandises transportées, et
déterminer, à l'aide du moyen de détermination (29), un taux d'occupation actuel du moyen de transport (20) par les marchandises, sur la base de la position d'au moins l'un des moyens de détection (25, 26), dans lequel la position a été réglée par le moyen de réglage (28) par rapport au moyen de transport (20).
